# EUROPEAN PATENT APPLICATION

(11) **EP 4 253 047 A1**
(43) Date of publication of application: **04.10.2023**
(21) Application number: 23159800.4
(22) Date of filing: 02.03.2023
(51) Int. Cl.: B32B 27/10, B32B 27/32, B65B 3/00, B65B 7/28, B65D 5/02, B65D 5/06, B65D 5/74, B65D 75/44, B65D 75/48

(54) **A LAMINATED PACKAGING MATERIAL AND PACKAGING CONTAINER MANUFACTURED THEREFROM**

(30) Priority: 29.03.2022 EP 22164943
(71) Applicant: Tetra Laval Holdings & Finance S.A., 1009 Pully (CH)
(72) Inventor: KLESHCHANOK, Dzina, 221 86 Lund (SE); MARKELING, Filip, 221 86 Lund (SE); CAMACHO, Walker, 221 86 Lund (SE)
(74) Representative: Tetra Pak - Patent Attorneys SE

(57) **Abstract**

The present invention relates to a non-foil, carton-based laminated packaging material (10) suitable for heat-sealable packaging of oxygen-sensitive products, comprising a barrier-coated BOPP polymer film (12), and to packaging containers made from the laminated packaging material.

## Description

### Technical field

The present invention relates to a laminated, non-foil packaging material for packaging of oxygen sensitives products, such as liquid, semi-liquid or viscous food, comprising a bulk layer of paper, paperboard or other cellulose-based material, a first outermost, liquid tight, heat sealable polymer layer, a second innermost liquid tight, heat sealable polyethylene layer and, between the bulk layer and the second innermost liquid tight, heat sealable polyethylene layer, a barrier-coated polymer film, and to a packaging container comprising the laminated packaging material.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for the purpose of aseptic packaging of oxygen-sensitive products, such as packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. To secure interlayer adhesion and package integrity, the aluminium foil is normally laminated directly adjacent a functionalised polyolefin-based adhesive, i.e. a polyolefin co- or graft-polymer having a low amount of functional groups, to increase the adhesive properties to adjacent layer surfaces.

Also on the outside of the bulk layer, there is an outermost heat sealable polymer layer, suitably a polyolefin homopolymer, such as LDPE.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material. Each package may be equipped with an opening device, such as a screw cork, before or after filling, forming and sealing of the container.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging has inherent barrier properties also to water vapour, to light, to aroma, flavour and acidic substances, and is still the most cost-efficient packaging material, at its level of performance, available on the market today. It normally has a thickness from 6 to 9 µm. Moreover, the aluminium foil enables heat sealing and heating of the laminated material by means of induction in the aluminium foil.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is also a general incentive towards developing pre-manufactured films or sheets having high and multiple barrier functionalities, i.e. not only oxygen and gas barrier but also water vapour-, chemical- or aroma-substance-barrier properties.

An early patent publication US5508075, describes a laminated packaging material for liquid carton packaging, which in addition to a carton or paperboard comprises also a barrier-coated biaxially oriented film of polyethylene terephthalate (BOPET) or polypropylene (BOPP), which is coated with a coating of silicon oxide (SiOx). The carton and the barrier layers are laminated to thermoplastic polymers of low density polyethylene (LDPE) and not specified adhesive layers.

The patent publication WO2013/041469A1, of a more recent publication date, describes a specific, simultaneously, biaxially oriented film having a base or core layer of BOPP, a skin layer of an ethylene vinyl alcohol copolymer (EVOH), and an optional barrier coating, employed for barrier-coated films in liquid carton laminated packaging materials for aseptic packaging of liquid food. The film is laminated to the carton and to further polyethylene layers.

There remains, however, a need for an improved laminated packaging material for the purpose of liquid carton packaging, comprising such a gas barrier-coated polymer film substrate.

### Disclosure of the invention

It is, accordingly, an object of the present invention to provide a non-aluminium-foil based ("non-foil") laminated packaging material for packaging of oxygen-sensitive products, such as food products, such as in particular liquid, semi-liquid, viscous or wet food products, having good gas barrier properties as well as enabling good integrity of filled and sealed packaging containers made from the laminated packaging material.

It is more specifically an object of the invention to provide such a laminated packaging material having good gas barrier properties, good interlayer adhesion as well as good heat sealing properties, upon conversion into packaging containers for liquid, semi-liquid or viscous food.

It is a further object to provide such a non-aluminium-foil based ("non-foil") laminated packaging material having good recyclability and sustainability characteristics, i.e.fulfilling the needs of future sustainable, packaging materials for packaging of oxygen-sensitive products.

A yet further object is to provide such a non-foil, heat-sealable laminated packaging material, and packaging containers made therefrom, enabling long-term aseptic storage under ambient conditions of liquid, semi-liquid or viscous food products.

These objects are thus attainable according to the present invention by the non-foil laminated packaging material, by the method for manufacturing of the non-foil laminated packaging material, and by packaging containers made from the laminated packaging material, as defined in the appended claims.

### Summary of the invention

According to a first aspect of the invention, a laminated, non-foil, packaging material for packaging of oxygen-sensitive food products, such as liquid, semi-liquid or viscous food, is provided, comprising a bulk layer of paper, paperboard or other cellulose-based material, a first outermost, liquid tight, heat sealable polymer layer, a second innermost liquid tight, heat sealable polyethylene layer and, arranged on the inner side of the bulk layer of paper or paperboard, towards the inside of a packaging container made from the packaging material, between the bulk layer and the second innermost liquid tight, heat sealable polyethylene layer, a barrier-coated polymer film, which comprises a polypropylene polymer, PP, film substrate and a vapour deposited gas barrier coating, wherein the second innermost liquid tight, heat sealable polyethylene layer is bonded to the un-coated side of the barrier-coated polymer film by means of a first interjacent bonding layer of a linear low density polyethylene, m-LLDPE, manufactured by the presence of a single-site or constrained-geometry catalyst, such as a metallocene catalyst.

The second innermost liquid tight, heat sealable polyethylene layer may be selected from the group consisting of low-density polyethylene, LDPE, linear low density polyethylene, LLDPE, linear low density polyethylene polymerized by means of a constrained-geometry catalyst, m-LLDPE, i.e. a single-site catalyst, such as a metallocene-catalyst, and blends of two or more of said polyethylenes. Preferably, the second innermost layer is a blend of LDPE and m-LLDPE and most preferably, it is a blend of from 60 to 80 weight-% of m-LLPDE and from 20 to 40 weight-% LDPE. It may further be applied at from 15 to 25 g/m², such as at from 16 to 22 g/m², by means of coextrusion coating together with the first interjacent bonding layer comprising in the majority, or consisting of, an mLLDPE, which is applied at from 4 to 8 g/m².

The described configuration of the thermoplastic polymer layers applied on the inside of the barrier-coated polymer film, has shown improved interlayer integrity and adhesion to support the overall integrity of packaging containers made therefrom, in particular of such packaging containers filled with liquid beverage or food. It is of high importance in the packaging of heavy products, such as liquids, to have strong seals and good interlayer bonding at and around the sealing zones of the packaging containers. The claimed inside layer configuration has proven to provide the strongest inside layer adhesion and laminate integrity seen so far in these kind of laminates.

The polypropylene polymer film substrate may be selected from the group consisting of films based on an unoriented, mono- or biaxially oriented polypropylene (PP, OPP, BOPP) film, or a multilayer film having a core or major layer comprising any of said polymers. The most common and preferred polypropylene polymer film substrate is a biaxially oriented such film, i.e. a BOPP film.

The vapour deposited gas barrier coating may be selected from a coating material comprising one or more of an aluminium oxide, AlOx, silicon oxide, SiOx, carbon-containing silicon oxide, SiOxCy, an amorphous diamond-like carbon coating, DLC, or an aluminium metallization.

In a second aspect of the invention there is provided a packaging container comprising the laminated packaging material of the first aspect. According to an embodiment, the packaging container is manufactured at least partly from the laminated packaging material of the invention, and according to a further embodiment it is in its entirety made of the laminated packaging material.

### Detailed description

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well-functioning and robust heat-sealing operations in the filling machines, which in turn is ensured by adequately adapted heat-sealing properties of the laminated packaging material.

The term "liquid, semi-liquid or viscous food" generally refers to food products having a flowing content that optionally may contain also solid pieces of food. Dairy and milk, soy, rice, grains and seed drinks, juice, nectar, still drinks, energy drinks, sport drinks, coffee or tea drinks, coconut water, wine, soups, crushed tomatoes, sauce (such as pasta sauce), beans and olive oil are some non-limiting example of food products contemplated.

Examples of other oxygen-sensitive food products, possible to package and protect with the laminated packaging materials of the present disclosure are e.g. dry and/or fatty foods.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that he package has barrier properties towards gases and vapours, such as towards oxygen gas, in order to keep its original taste and nutritional value intact, such as for example its vitamin C content.

With the term "bulk layer" is normally meant the "core layer" or the thickest layer or the layer containing the most material in a multilayer laminate, i.e. the layer which is contributing most to the mechanical properties and the dimensional stability of the laminate and the structural stability of packaging containers folded from the laminate, such as a thick paper, paperboard or carton. It may alternatively mean a layer providing a greater thickness distance in a sandwich structure, which further interacts with stabilising facing layers, which have a higher Young's modulus, on each side of the bulk layer, in order to achieve sufficient such mechanical properties, such as bending stiffness, for achieveing structure stability of formed packaging containers.

With the term "non-foil" packaging material, is meant a laminated packaging material, which does not comprise an aluminium foil of a thickness in the micrometer-scale, such as conventional aluminium foils for liquid carton packaging which are normally from 6 to 9 µm thick. A "non-foil" packaging material may comprise a metallisation layer, however, as the thickness of e.g. an aluminium metallisation layer is in the nano-meter scale. The amount of aluminium material employed in such a metallisation coating is very low, and have, in comparison to aluminium foils, a significantly reduced impact on recycling and exploitation of material resources.

OTR is measured herein with an Oxtran 2/21 (Mocon) equipment based on coulometric sensors, according to ASTM F1927-14 and ASTM F1307-14.

The method for determining OTR identified the amount of oxygen per surface and time unit at passing through a material at a defined temperature, a given atmospheric pressure, during a certain time, i.e at an atmosphere of 20, or alternatively, 100 % oxygen, expressed as 0.2 or 1 atm (oxygen), during 24 hours. See further description of OTR test methods in connection with the Examples.

Thus, for the purpose of the laminated, non-foil, packaging material of the invention, the bulk layer of the laminated material is a paper or paperboard or other cellulose-based material layer. The bulk layer provides the laminated material with bending stiffness, in-plane compression resistance to support dimensional stability of packaging containers made thereof.

A paper or paperboard bulk layer for use in the invention usually has a thickness of from about 100 µm up to about 600 µm, and a surface weight of approximately 100-500 g/m², preferably about 200-300 g/m², and may be a conventional paper or paperboard of suitable packaging quality.

For low-cost aseptic, long-term packaging of liquid food, a thinner packaging laminate may be used, having a thinner paper core layer. The packaging containers made from such packaging laminates are not fold-formed and are more similar to pillow-shaped flexible pouches. A suitable paper for pouch-packages usually has a surface weight of from about 50 to about 140 g/m², preferably from about 70 to about 120 g/m², more preferably from 70 to about 110 g/m²

The bulk layer is bonded to the barrier-coated surface of the barrier-coated polymer film by a second interjacent bonding layer, which may be of a thermoplastic polymer. The most cost-efficient and suitable thermoplastic polymer for the second interjacent bonding layer is a low-density polyethylene, LDPE. It may be applied at from 15 to 25 g/m², such as from 16 to 22 g/m², by means of melt extrusion laminating the barrier-coated polymer film and the bulk layer to the respective sides of the second interjacent polymer bonding layer.

The bonding layer may thus bind the bulk layer to the barrier-coated polymer film by melt extrusion laminating the bonding polymer layer between a web of the bulk layer and a web of the barrier-coated polymer film, and simultaneously pressing the three layers together while being forwarded through a lamination roller nip, thus providing a laminated structure by extrusion lamination.

Suitable thermoplastics for outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to an embodiment, the first, outermost, protective and liquid-tight layer is an LDPE, while the second, innermost heat sealable, liquid-tight layer is a blend composition of m-LLDPE and LDPE for optimal lamination and heat sealing properties.

The same thermoplastic polyolefin-based materials, as listed regarding the first, outermost and the second, innermost layers, and in particular polyethylenes, are also suitable as the second, interjacent bonding layer in the interior of the laminated material, i.e. between the bulk or core layer, and the barrier film.

According to an alternative embodiment, suitable polymers for the second, interjacentbonding layer may also be so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

Plain homopolymer low density polyethylene, LDPE, is preferable and advantageous from a recycling point of view.

For recycling purpose and sustainability of materials, it is an advantage to use only one type of polymer in the packaging material, such as polyolefin polymers having similar properties and compatibility, such that a recycled blend fraction of those polymers easily can find a second premium purpose or use. The gas barrier coating and any optional skin layers constitute only a minor fraction of the total material, such that desintegrating and recycling of the laminated packaging material of the invention, will result in only two streams of recycled materials, i.e. cellulose fibres and polyolefin polymers. This is an improvement over existing gas-tight laminated materials where several different materials are mixed in packaging materials, as blended layers or as multilayer laminates, and difficult to separate.

According to an embodiment, the first outermost, liquid tight, heat sealable polymer layer may comprises a polymer of polyethylene, such as selected from the group consisting of low-density polyethylene, LDPE, medium density polyethylene, MDPE, and any blend thereof. The first outermost, liquid tight, heat sealable polymer layer may be applied at an amount from 8 to 15 g/m², such as from 10 to 13 g/m². Preferably, the liquid tight, heat sealable polymer applied is LDPE.

The polypropylene polymer film substrate of the barrier-coated polymer film may have a thickness from 12 to 25 µm, such as from 15 to 23 µm, such as from 15 to 20 µm, for optimal mechanical strength, integrity, barrier properties and cost efficiency of the laminated material of the invention.

The polypropylene polymer film substrate may further have a skin layer on one of its surfaces, configured to receive the vapour deposited gas barrier coating. The skin layer may comprises a vinyl alcohol based polymer, such as an ethylene vinyl alcohol copolymer, EVOH, or a polyvinyl alcohol, PVOH. The definition of such a skin layer is that it has been applied to, or melt processed together with, the polypropylene core of the film substrate, at a substantially lower thickness than the core layer of polypropylene, and subsequently been stretched, i.e. oriented, together with the core layer. The resulting film becomes substantially thinner altogether by the stretching operation, and the resulting thickness of the skin layer may be as thin as from 0.5 to 2 µm only.

Such a skin layer will contribute to some degree with some oxygen barrier, due to its inherent oxygen barrier properties of EVOH or PVOH polymers and may also constitute a receiving surface for subsequently applied barrier coatings. It may thus provide the surface of a polypropylene polymer film substrate with a higher surface energy to enable good bonding to a subsequent deposition coating and is therefore sometimes also named a high-surface energy, HSE, layer.

The barrier coating to be coated onto the barrier-coated polymer film, may be applied by means of physical vapour deposition (PVD) or chemical vapour deposition (CVD), for example by plasma enhanced chemical vapour deposition (PECVD).

In an embodiment, the vapour deposition coating is of a material selected from metals, metal oxides, inorganic oxides and carbonaceous vapour deposition coatings.

In a further embodiment, the barrier deposition coating is a vapour deposition coating selected from the group consisting of an aluminium metallisation coating and aluminium oxide, AlOx,

Such thin vapour deposited coating layers are nanometer-thick, i.e. having a thickness that is most suitably counted in nanometers, for example of from 5 to 500 nm (50 to 5000 Å), such as from 5 to 200 nm, more such as from 5 to 100 nm, such as from 5 to 50 nm.

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more.

In an embodiment, the barrier deposition coating may be applied to a thickness of from 10 to 80 nm, such as from 10 to 50 nm, such as from 10 to 45 nm.

Specific examples of vapour deposition coatings are aluminium oxide (AlOx, Al₂O₃) and silicon oxide (SiOx) coatings.

Such coatings may also be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

Generally, thin coatings of metal or a mixture of metal and metal oxide provide both barrier properties against oxygen and water vapour and may be used when the desired function is to prevent oxygen and/or water vapour from migrating into and through the multilayer film or packaging laminate. Preferably, for the purpose of manufacturing food packaging materials, the metal in a metallisation or inorganic metal coating is aluminium (Al).

In an embodiment, an aluminium metallised layer is applied to an optical density (OD) of 1.8 or above, such as from 1.8 to 3.5, such as from 2.0 to 3.0. At an optical density lower than 1.8, the barrier properties of the metallised film may be rather low.

Optical density is measured in production by means of a densitometer, i.e. an instrument (such as from Macbeth, Tobias or similar), which uses the principle of diffuse light transmission. The instrument is suitable for measuring the optical density values of films coated with aluminium metallization. The accuracy and precision of the measurements is high and about +/- 0.2 OD and about +/-0.01 OD, respectively, within a measuring range from 0 to 6.60 OD.

In lab measurements, a spectrophotometer may alternatively measure the light transmission over the full visible spectrum (380-800 nm). The optical density is calculated from the light transmission (T) value at 560 nm, according to a formula OD= -log₁₀ (I₁/I₀) and the values obtained are equally accurate (+/- 0.2 OD) and comparable to light transmission densitometer values.

The vapour deposited gas barrier coating of the barrier-coated polymer film, may further have a top coating applied by means of wet solution or dispersion coating and subsequent drying, which provides further inherent barrier properties and also further covers and "heals" any defects in the first applied vapour deposition coating. The top coating may comprise a vinylalcohol-based polymer, such as an ethylene vinyl alcohol copolymer, EVOH, or a polyvinyl alcohol, PVOH. Alternative top coatings could also comprise, or consist of, acrylic polymers. It may further comprise low amounts of dispersed or partly compounded inorganic material in the composition, such as clay filler material or sol-gel material. A top coating may thus be applied in a separate coating step onto the vapour deposited barrier coating of the barrier-coated polymer film, to enhance barrier properties further.

In a further embodiment, the opposite, uncoated side of the polypropylene polymer film substrate has a skin layer comprising a copolymer comprising ethylene and propylene, and optionally a third comonomer, such as an ethylene-propylene copolymer or a terpolymer comprising ethylene, propylene and butylene. These polymers have lower melting temperatures and may thus enable lower heat sealing temperatures, which may permit the core or main layer of polypropylene to remain geometrically, i.e. dimensionally, stable during the sealing operation. The layer can be surface treated (flame, plasma, corona) to provide a desired surface energy in further film application processes.

A laminated packaging material made according to the above provides good integrity when transformed into filled packaging containers, by good adhesion and interaction between the adjacent layers within the laminated construction and by retaining good quality of the gas barrier coating vapour deposition coating. Especially, it was an important conclusion that the interlayer adhesion within the laminated packaging material, as well as the oxygen gas barrier properties, may be maintained also under wet packaging conditions, such as for packaging of liquids and wet food,.

According to a further embodiment, the packaging container formed from the laminated packaging material may be partly sealed, filled with liquid or semi-liquid food and subsequently sealed, by sealing of the packaging material to itself, optionally in combination with a plastic opening or top part of the package.

To conclude, robust and reliable packages for liquid food packaging for long term shelf-life and storage may be obtained by the barrier-coated polymer film and the laminated packaging material comprising it, as defined by the invention. The laminated packaging material structure works better for the forming into fold-formed packages, both thanks to the improved adhesion between the polypropylene polymer film substrate and the inside heat sealable thermoplastic layers and thanks to the improved integrity of the heat sealed parts of the formed packages.

### Examples and description of preferred embodiments

In the following, preferred embodiments of the invention will be described with reference to the drawings, of which:
Fig. 1 schematically shows in cross-section a laminated, non-foil, packaging material of the invention, comprising the barrier-coated polymer film laminated to a cellulose-based bulk layer,
Fig. 2a shows schematically a method, for melt extrusion laminating two webs together,
Fig. 2b shows schematically a method, for melt (co-) extrusion coating layer(s) of thermoplastic polymers onto a web substrate, to form innermost and outermost layers of a packaging laminate of the invention,
Fig. 3a-3d are showing typical examples of packaging containers produced from the laminated packaging material according to the invention, and
Fig. 4 is showing the principle of how such packaging containers may be manufactured from the packaging laminate in a continuous, roll-fed, form, fill and seal process.

### Examples

Laminated materials were produced having the principal layer structure as follows, as listed in Table 1, and the adhesion between the first interjacent bonding layer of the inside layers and the back-side of the barrier-coated BOPP film was measured.
//LDPE outside 12 g/m² / paperboard 80 mN / second interjacent bonding layer LDPE 20 g/m² / barrier coating/ film substrate BOPP / X / (blend of mLLDPE + LDPE 70:30) 19 g/m²//

Layer X, if used, corresponds to the first interjacent bonding layer of mLLDPE, of the invention, and was applied at about 6 g/m².

In preceding tests, it had been attempted to turn the barrier-coated polymer film also in the other direction, i.e. such that the gas barrier coating is facing towards the second, innermost, heat sealable layer. It was concluded that the barrier-coating needs instead to be turned towards the bulk layer, and that a sufficiently good adhesion towards the second interjacent bonding layer of LDPE, which is bonding the bulk layer to the barrier-coated polymer film, was achieved by means of appropriate surface treatments, regarding tested types of barrier coatings (aluminium metallisation, AlOx- , SiOx-, SiOxCy-coatings). It was concluded that the adhesion of the barrier coating to the bulk-to-barrier interjacent bonding layer of LDPE was on par with the corresponding adhesion in an Al-foil reference laminate. The adhesion level at that layer interface is also slightly less critical than the adhesion level on the inside of the barrier-coated film, i.e. vs the inside layers. There will be no or less migration of vapour, moisture or molecular substances from the filled product towards this interface, thanks to the barrier coating being also a migration barrier to most such compounds or molecules. Furthermore, there is an advantage to turn the barrier coating in the direction of the bulk layer, in that it will be better protected in this way, from damages while handling the laminated material in lamination and packaging machine operations.

Before measuring the adhesion, the laminated materials were conditioned at 23 °C, 50 % RH for at least 24 hours.

Adhesion measurements were performed at room temperature with a 180° degrees peel force test apparatus (Instron). Peel speed was 100 mm/min. The measurements were performed at 23 °C, 50 % RH. Peeling is thus performed at the interface between the uncoated side of the BOPP-film and the inside layers, the peel-arm being the inside film. The given adhesion value is given in N/m and is an average of 5 measurements.

The results of the adhesion measurements were as presented in Table 1.

**Table 1**

| Sample No. | Layer configuration of layers inside of barrier-coated polymer film | Adhesion (N/m) |
|---|---|---|
| Comparative Example 1 | .../ Al-foil / adhesive EAA copolymer 6 g/m2 / blend (mLLDPE + LDPE) / (REF) | 200 |
| Comparative Example 2 | .../metallised BOPP-film/ adhesive EAA copolymer 6 g/m2 / blend (mLLDPE + LDPE) / | 11 |
| Comparative Example 3 | .../AlOx-coated BOPP-film/ adhesive EAA copolymer 6 g/m2 / blend (mLLDPE + LDPE) / | 12 |
| Comparative Example 4 | .../SiOx-coated BOPP-film/ adhesive EAA copolymer 6 g/m2 / blend (mLLDPE + LDPE) / | 17 |
| Comparative Example 4 | .../AlOx-coated BOPP/ LDPE 6 g/m2 / blend (mLLDPE + LDPE) / | 120 |
| Comparative Example 5 | .../metallised BOPP-film/ blend (mLLDPE + LDPE) / | 50 |
| Example 1 | .../AlOx-coated BOPP/ mLLDPE 6 g/m2 / blend (mLLDPE + LDPE) / | 340 |
| Example 2 | .../SiOx-coated BOPP/ mLLDPE 6 g/m2 / blend (mLLDPE + LDPE) / | 315 |

It may thus be concluded from the adhesion measurements, that for a sufficient inside layer adhesion and internal integrity of the laminated material, the best developed inside layer configuration is one with an interjacent layer of mLLDPE between the back-side of the barrier-coated BOPP film, and the innermost, liquid tight and heat sealable layer.

Direct extrusion coating of the innermost layer comprising a blend of mLLDPE and LDPE provided clearly insufficient adhesion between the back side of a BOPP film and the inside heat sealable layer. The conventionally used ethylen-acrylic-acid copolymer (EAA), representing olefin-based adhesive polymers with carboxylic functionality, at this position in the laminated mateiral did not work at all. The use of a conventional LDPE as an interjacent bonding layer provided some better adhesion level, but was also insufficient at this location of the laminate. It has been seen with the presently produced reference aluminium-foil based materials, that an adhesion of at least 200 N/m is desirable and needed.

The very good adhesion values in Examples 1 and 2, were increased by at least 100 N/m above the reference value of the presently produced aluminium-foil based materials and were obtainable without any prior surface treatment.

Further, relating to the attached figures:

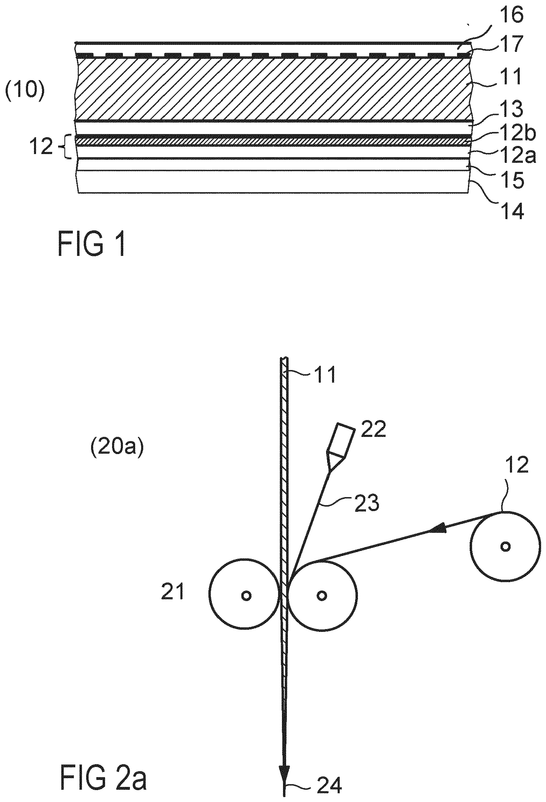

In Fig. 1, a laminated packaging material 10 for packaging of oxygen sensitive products, such as for liquid carton packaging is shown, which comprises a barrier-coated polymer film 12, to provide the laminated material with gas barrier properties, above all. The polymer film 12 thus comprises a polymer film substrate 12a of a pre-manufactured, biaxially oriented film of polypropylene (i.e. a BOPP film) and a nano-meter thick gas barrier coating 12b, which is applied on one side of the film, by means of a vapour deposition coating method. Alternative gas barrier coatings 12b to be applied by means of dispersion or solution coating onto the polymer film substrate 12a and subsequently dried, are conceivable. However, vapour deposition coated barrier coatings may be able to provide significantly higher oxygen barrier properties and/or water vapour barrier properties at very low thicknesses (at nanometer scale) and high quality of the coatings.

The laminated material further comprises a bulk layer 11 of paperboard, in this example having a bending force of 80 mN and a grammage weight of about 200 g/m², thus suitable for the filling, fold-forming and sealing into smaller packages containing liquids or beverage, such as of 200-250 ml, so-called portion packages.

The bulk layer 11 is laminated to the barrier-coated side of the barrier-coated polymer film 12, by an interjacent, i.e. intermediate, bonding layer 13 of a thermoplastic polymer, in this most common case a low density polyethylene (LDPE). The intermediate bonding layer 13 is formed by means of melt extruding it as a thin polymer melt curtain between the two webs and thus laminating the bulk layer and the barrier-coated polymer film to each other, as all three layers pass through a cooled press roller nip. The amount applied of the intermediate bonding layer 13 is from 15 to 25 g/m², such as from 18-23 g/m².

The laminated packaging material further comprises an outermost, protective material layer, i.e. in this case a liquid tight and heat sealable polymer layer 16 applied on the outside of the bulk layer 11, which side is to be directed towards the outside of a packaging container produced from the packaging laminate. The layer 16 is transparent to show an optional printed décor pattern 17, which may be printed onto the bulk layer of paper or paperboard, to the outside. Thereby, the printed décor pattern may inform about the contents of the package, the packaging brand and other information targeting consumers in retail facilities and food shops. The polymer of the outermost layer 16 may be a polyolefin, such as a conventional low density polyethylene (LDPE) of a heat sealable quality, but could also include further similar polymers, including LLDPEs. It is here applied at an amount of about 12 g/m².

An innermost liquid tight and heat sealable layer 14 is arranged on the opposite side of the bulk layer 11, which is to be directed towards the inside of a packaging container produced from the packaging laminate, i.e. the layer 14 will be in direct contact with the packaged product. The thus innermost heat sealable layer 14, which is to form strong transversal heat seals of a liquid packaging container made from the laminated packaging material, may comprise one or more in combination of polyethylenes selected from the groups consisting of LDPE, linear low density polyethylene (LLDPE), and LLDPE produced by polymerising an ethylene monomer with a C4-C8, such as a C6-C8, alpha-olefin alkylene monomer in the presence of a metallocene catalyst, i.e. a so called metallocene - LLDPE (m-LLDPE). The innermost liquid tight and heat sealable layer 14 may be applied at an amount of about 18-22 g/m².

Preferably, the innermost heat sealable layer 14 comprises a heat sealable blend of an m-LLDPE produced by a single-site catalyst, such as a metallocene catalyst, and an LDPE at a weight ratio of from 60:40 to 80:20, and is applied at a grammage of from 18 to 22 g/m². The innermost heat sealable layer is coextrusion coated as a melt together with a second interjacent bonding layer 15 of an m-LLDPE polymer at about 5-7 g/m², by which it is well adhered to the backside of the barrier-coated BOPP film 12.

In Fig. 2a, a principal method of melt extrusion lamination is shown. The cellulose-based bulk layer 11, as well as the barrier-coated polymer film 12, are forwarded as continuous material webs through a lamination nip 21, and joined to each other via an interjacent melt extruded polymer layer, which is expelled as a curtain of molten polymer 23 into the nip, by means of an extruder feedblock and die 22. The thus laminated material 24 is forwarded to a next lamination station, or wound onto a roll, not shown.

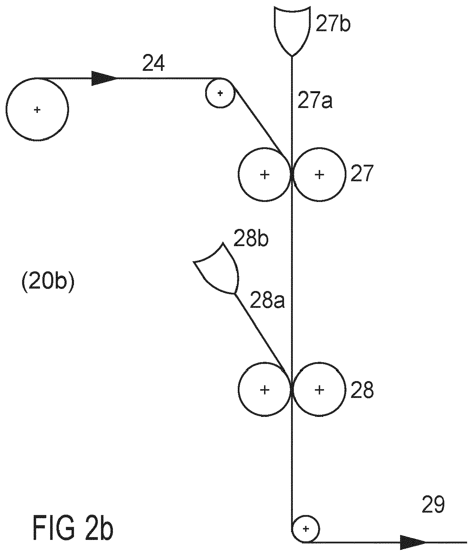

Fig. 2b shows the process steps for the lamination steps in the manufacturing of the packaging laminate 10, of Fig. 1, after the bulk layer 11 has been first laminated to the barrier-coated polymer film 12, as shown in Fig. 2a.

The resulting paper pre-laminate web 24 is forwarded from an intermediate storage reel, or directly from the lamination station for laminating the pre-laminate of the bulk layer to the barrier-coated celullosed substrate. The non-laminated side of the bulk layer part of 24, i.e. its print side 17, is melt- extrusion coated by being joined at a cooled roller nip 27 to a molten polymer curtain 27a of the LDPE, which is to form the outermost layer 16 of the laminated material, the LDPE being extruded from an extruder feedblock and die 27b. Subsequently, the pre-laminated bulk-barrier-film web, now having the outermost layer 16 coated on its printed side, i.e. the outside, passes a second extruder feedblock and die 28b and a lamination nip 28, where a molten polymer curtain 28a is joined and coated onto the other side of the pre-laminate, i.e. onto the uncoated side of the barrier-coated polymer film substrate 12. Thus, the innermost heat sealable layer 14, is melt coextrusion coated onto the back-side of the barrier-coated film 12, together with an inerjacent polymer bonding layer 15, i.e. onto the inner side of the "bulk-barrier-film" pre-laminate web 24, to form a finished laminated packaging material 10; 29, which is finally wound onto a storage reel, not shown.

These two coextrusion steps at lamination roller nips 27 and 28, may alternatively be performed as two consecutive steps in the opposite order.

According to different embodiment of the method of the invention, one or both of the outermost layers 14 or 16 may instead be applied in separate pre-lamination stations, where the coextrusion coated outermost protective layers 16 and 14, respectively, are first applied to the outside of the (optionally printed) bulk paperboard layer 11 and onto the barrier-coated polymer film 12, and finally thereafter, the two pre-laminated paper webs may be laminated to each other, as described above in connection to Fig. 2a, by the interjacent polymer bonding layer 13.

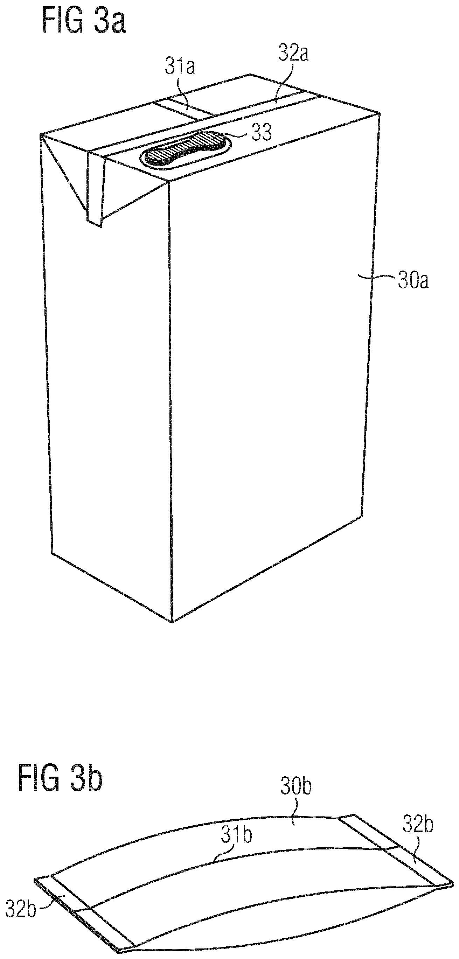

Fig. 3a shows an embodiment of a packaging container 30a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 31a and 32a, respectively, and optionally an opening device 33. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

Fig. 3b shows an alternative example of a packaging container 30b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 32b. The packaging container will remain a pillow-shaped pouch-like container and be distributed and sold in this form.

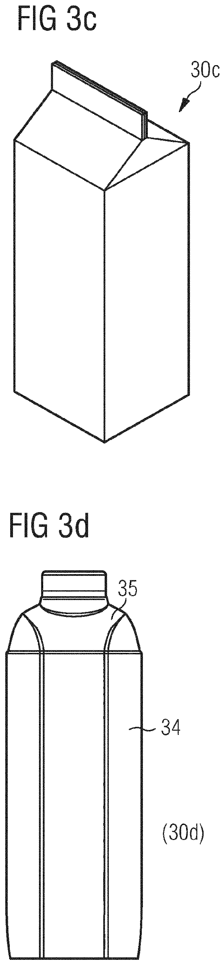

Fig. 3c shows a gable top package 30c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 3d shows a bottle-like package 30d, which is a combination of a sleeve 34 formed from a pre-cut blanks of the laminated packaging material of the invention, and a top 35, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 35 with an opening device attached in a closed position, to a tubular sleeve 34 of the laminated packaging material, sterilizing the thus formed bottle-top capsule, filling it with the food product and finally fold-forming the bottom of the package and sealing it.

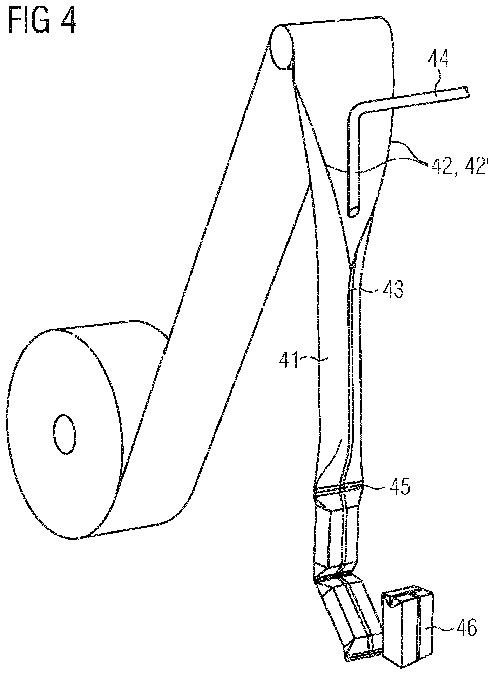

Fig. 4 shows the principle as described in the introduction of the present application, i.e. a web of packaging material is formed into a tube 41 by overlapping the longitudinal edges 42, 42' of the web and heat sealing them to one another, to thus form an overlap joint 43. The tube is continuously filled 44 with the liquid food product to be filled and is divided into individual, filled packages by repeated, double transversal seals 45 of the tube at a pre-determined distance from one another below the level of the filled contents in the tube. The packages 46 are separated by cutting between the double transversal seals (top seal and bottom seal) and are finally shaped into the desired geometric configuration by fold formation along prepared crease lines in the material.

As a final remark, the invention is not limited by the embodiments shown and described above, but may be varied within the scope of the claims.

## Claims

1. Laminated, non-foil, packaging material (10) for packaging of oxygen-sensitive food products, such as liquid, semi-liquid or viscous food, comprising a bulk layer of paper, paperboard or other cellulose-based material (11), a first outermost, liquid tight, heat sealable polymer layer (16), a second innermost liquid tight, heat sealable polyethylene layer (14) and, arranged on the inner side of the bulk layer of paper or paperboard, towards the inside of a packaging container made from the packaging material, between the bulk layer and the second innermost liquid tight, heat sealable polyethylene layer, a barrier-coated polymer film (12), which comprises a polypropylene polymer, PP, film substrate (12a) and a gas barrier coating (12b), wherein the second innermost liquid tight, heat sealable polyethylene layer (14) is bonded to the uncoated side of the barrier-coated polymer film by means of a first interjacent bonding layer (15) of a linear low density polyethylene, m-LLDPE, manufactured by the presence of a single-site or constrained-geometry catalyst, such as a metallocene catalyst.

2. Laminated, non-foil, packaging material (10) as claimed in claim 1, wherein the second innermost liquid tight, heat sealable polyethylene layer (14) is selected from the group consisting of low-density polyethylene, LDPE, linear low density polyethylene, LLDPE, linear low density polyethylene polymerized by means of a constrained-geometry catalyst, m-LLDPE, i.e. a single-site catalyst, such as a metallocene-catalyst, and blends of two or more of said polyethylenes.

3. Laminated, non-foil, packaging material (10) as claimed in claim 1, wherein the second innermost liquid tight, heat sealable polyethylene layer (14) is applied by means of coextrusion coating at from 15 to 25 g/m², such as at from 16 to 22 g/m² together with a first interjacent bonding layer (15) at from 4 to 8 g/m².

4. Laminated, non-foil, packaging material (10) as claimed in any one of the preceding claims, wherein the first outermost, liquid tight, heat sealable polymer layer (16) comprises a polymer of polyethylene, such as selected from the group consisting of low-density polyethylene, LDPE, medium density polyethylene, MDPE, and blends thereof.

5. Laminated, non-foil, packaging material (10) as claimed in any one of the preceding claims, wherein the polypropylene polymer film substrate (12a) is selected from the group consisting of films based on an unoriented, mono- or biaxially oriented polypropylene (PP, OPP, BOPP) film, or a multilayer film having a core layer comprising any of said materials.

6. Laminated, non-foil, packaging material (10) as claimed in any one of the preceding claims, wherein the gas barrier coating (12b) is selected from a vapour deposited coating material comprising one or more of an aluminium oxide, AlOx, silicon oxide, SiOx, carbon-containing silicon oxide, SiOxCy, an amorphous diamond-like carbon coating, DLC, or an aluminium metallization.

7. Laminated, non-foil, packaging material (10) as claimed in any one of the preceding claims, wherein the polypropylene polymer film substrate (12a) has a skin layer on one of its surfaces, configured to receive the vapour deposited gas barrier coating (12b), and which comprises a vinyl-alcohol based polymer, such as an ethylene vinyl-alcohol copolymer, EVOH, or a polyvinyl alcohol, PVOH.

8. Laminated, non-foil, packaging material (10) as claimed in any one of the preceding claims, wherein the vapour deposited gas barrier coating (12b) of the barrier-coated polymer film (12), further has a top coating applied by means of wet solution or dispersion coating and subsequent drying.

9. Laminated, non-foil, packaging material (10) as claimed in any one of the preceding claims, wherein the opposite, uncoated side of the polypropylene polymer film substrate (12a) has a skin layer comprising a copolymer comprising ethylene and propylene and optionally a third monomer.

10. Laminated, non-foil, packaging material (10) as claimed in any one of the preceding claims, wherein the polypropylene polymer film substrate (12a) has a thickness from 12 to 25 µm, such as from 15 to 23 µm, such as from 15 to 20 µm.

11. Laminated non-foil, packaging material (10) according to any one of the preceding claims, wherein the barrier-coated surface of the barrier-coated polymer film (12) is bonded to the bulk layer (11) by a second interjacent bonding layer (13) of a thermoplastic polymer.

12. Laminated non-foil, packaging material (10) according to claim 11, wherein the second interjacent bonding layer (13) is a polyolefin layer, such as comprises low density polyethylene, LDPE.

13. Laminated non-foil, packaging material (10) according to any one of claims 11-12, wherein the second interjacent bonding layer (13) is applied at from 15 to 25 g/m², such as from 16 to 22 g/m², by means of melt extrusion laminating the barrier-coated polymer film (12) and the bulk layer (11) to the respective sides of the second interjacent polymer bonding layer.

14. Packaging container comprising the laminated packaging material as defined in any one of claims 1-13.
